# DEMANDE DE BREVET EUROPEEN

(11) **EP 0 705 666 A1**
(43) Date de publication de la demande: **10.04.1996**
(21) Numéro de dépôt: 94402211.0
(22) Date de dépôt: 04.10.1994
(51) Int. Cl.: B25J 19/06, B23K 9/28

(54) **Dispositif de déclenchement d'arrêt automatique de machines, telles que robots**

(71) Demandeur: SA EUROSTAMP HEULIEZ, F-79140 Cerizay (FR)
(72) Inventeur: Queveau, Gérard, F-79140 Cerizay (FR); Couty, Gérard, F-79380 Montigny (FR); Moricet, Paul, F-79350 Chiche (FR)
(74) Mandataire: Rodhain, Claude

(57) **Abrégé**

L'invention concerne un dispositif de déclenchement d'arrêt automatique de machines telles que robots, du type comportant un bras pivotant porte-outils susceptible de prendre au moins deux positions, l'une dite "opérationnelle" et l'autre dite "de déclenchement" de l'arrêt du robot lorsque ledit bras est soumis à une force supérieure à celle exercée par des moyens élastiques maintenant le bras dans la position opérationnelle.

Ce dispositif est caractérisé en ce que le bras porte-outils (1) comporte à son extrémité (11), opposée à celle de l'outil (2), une tête (6) en forme de plateau, suspendue dans un boîtier (3) accouplé au robot, ladite tête étant appliquée, dans la position opérationnelle du bras, contre la base (4) de ce boîtier par la pression contrôlée d'un fluide, cette base comportant au moins un orifice de fuite (41) masqué, dans cette position du bras, par ladite tête (6) et susceptible d'être dégagée, lorsque le bras est sollicité par une force extérieure, supérieure à celle de la pression du fluide.

## Description

La présente invention concerne un dispositif d'arrêt automatique de machines telles que robots, du type comportant un bras pivotant porte-outils susceptible de prendre au moins deux positions, l'une dite "opérationnelle" et l'autre dite "de déclenchement" de l'arrêt du robot lorsque ledit bras est soumis à une force extérieure, supérieure à celle exercée par des moyens élastiques chargés de maintenir le bras dans sa position opérationnelle.

On connaît déjà de tels dispositifs d'arrêt automatique, notamment sur les robots de soudage, ces dispositifs étant rendus nécessaires pour pallier les aléas de programmation, de robstique, d'automatisme ou encore les aléas de positionnement des pièces à traiter dans l'espace. Ces dispositifs d'arrêt d'urgence sont généralement insérés entre le robot et l'outil, en l'espèce, un support de torche, et sont utilisés en tant que système anti-collision pour protéger les axes des robots contre les chocs et éviter la détérioration des outils embarqués, tout en permettant une procédure rapide de remise en production.

Les dispositifs connus font le plus souvent appel à des moyens mécaniques élastiques de type axeressort logés dans la tête du bras porte-outils, la pression exercée par les ressorts tarés étant calculée de sorte que si la torche heurte un obstacle sous n'importe quel angle, il se produise un décliquetage du bras porte-outils entraînant l'entrée en action d'un micro-rupteur de sécurité provoquant l'arrêt de la commande du robot. La plage élastique de décliquetage pour éviter les détériorations est, dans le cas de ce type de dispositif connu, constituée par un axe en forme de "diabolo" coopérant par une came avec un doigt monté sur ressort, le profil de la rampe de cet axe correspondant à l'étendue de la plage élastique de décliquetage. Dans ce type de dispositif ladite plage élastique de décliquetage est très étroite, ce qui n'autorise qu'un débattement très limité sur le plan latéral et une mobilité à l'enfoncement du bras porte-outils que de quelques millimètres. Ainsi, si la sollicitation est trop grande, c'est-à-dire si le choc ou l'effort appliqué sur le bras porte-outils est trop important, il y aura nécessairement destruction du support de torche et de son ensemble ainsi que détérioration des axes du robot entraînant un coût de remise en état relativement important.

L'invention a pour but de remédier à cet inconvénient et concerne à cet effet un dispositif d'arrêt d'urgence pour machines telles que robots permettant, sans détérioration du matériel, une détection des chocs latéraux dans tout plan, et une détection des chocs frontaux (enfoncement) de plusieurs dizaines de millimètres tout en autorisant un débattement important du support de torche dans tous les sens détectés et une remise en position initiale manuelle du bras porte-outils, ce qui permet à l'opérateur de prendre connaissance de l'obstacle qui a été la cause de l'arrêt d'urgence afin d'y remédier.

L'invention concerne donc un dispositif de déclenchement d'arrêt automatique de machines telles que robots, du type comportant un bras pivotant porte-outils susceptible de prendre au moins deux positions, l'une dite « opérationnelle » et l'autre dite « de déclenchement » de l'arrêt du robot lorsque ledit bras est soumis à une force supérieure à celle maintenant le bras dans la position opérationnelle, le bras porte-outils comportant à son extrémité , opposée à celle de l'outil , une tête , en forme de plateau, suspendue dans un boîtier accouplé au robot, ladite tête étant appliquée, dans la position opérationnelle du bras, contre la base de ce boîtier par la pression contrôlée d'un fluide, cette base comportant au moins un orifice de fuite masqué, dans cette position du bras, par ladite tête et susceptible d'être dégagée, lorsque le bras est sollicité par une force extérieure, supérieure à celle de la pression du fluide, dispositif caractérisé en ce que le centre de gravité de l'ensemble du bras est décalé par rapport à l'axe de la tête du bras, la pression du fluide appliquée sur la tête en forme de plateau étant suffisante pour maintenir le plateau de la tête en appui sur la base du boîtier .

Ainsi, lorsque le bras heurte un objet quelconque, ce bras bascule et le plateau de la tête s'incline, ce qui provoque une fuite du fluide. Par conséquent, le bras reste dans une position inclinée, « flottante », aucun moyen élastique de rappel n'étant prévu pour ramener le bras en position opérationnelle.

Pour remettre le bras en position opérationnelle, il est nécessaire de le positionner manuellement, pour que le plateau revienne en appui sur la base du boîtier.

Suivant un mode de réalisation préférentiel, le bras porte-outils est monté pendulaire par sa tête reposant sur la base du boîtier qu'il traverse.

Selon une caractéristique de l'invention, le bras est maintenu dans une position excentrée par rapport à l'axe principal de la tête par la pression du fluide s'exerçant sur la face supérieure de la tête en forme de plateau.

Avantageusement, le boîtier est constitué d'une enceinte dont la base est obturée par un couvercle pourvu d'une ouverture de passage du bras porte-outils dont les dimensions sont sensiblement supérieures à la section dudit bras, cette ouverture servant d'orifice de fuite lors du basculement de la tête du bras porte-outils, lorsque celui-ci est sollicité par une force extérieure de façon intempestive.

D'autres caractéristiques et avantages de l'invention ressortiront de la description ci-après et des dessins annexés qui illustrent, à titre d'exemple non limitatif, le dispositif de déclenchement d'arrêt automatique, dessins dans lesquels :
- la figure 1, est une vue en coupe du dispositif selon l'invention lorsque le bras porte-outils (ici un support de torche), est en position dite "opérationnelle",
- la figure 2, une vue en coupe identique à celle de la figure 1 mais montrant, en traits mixtes la cinématique du bras porte-outils en cas de choc latéral et frontal.

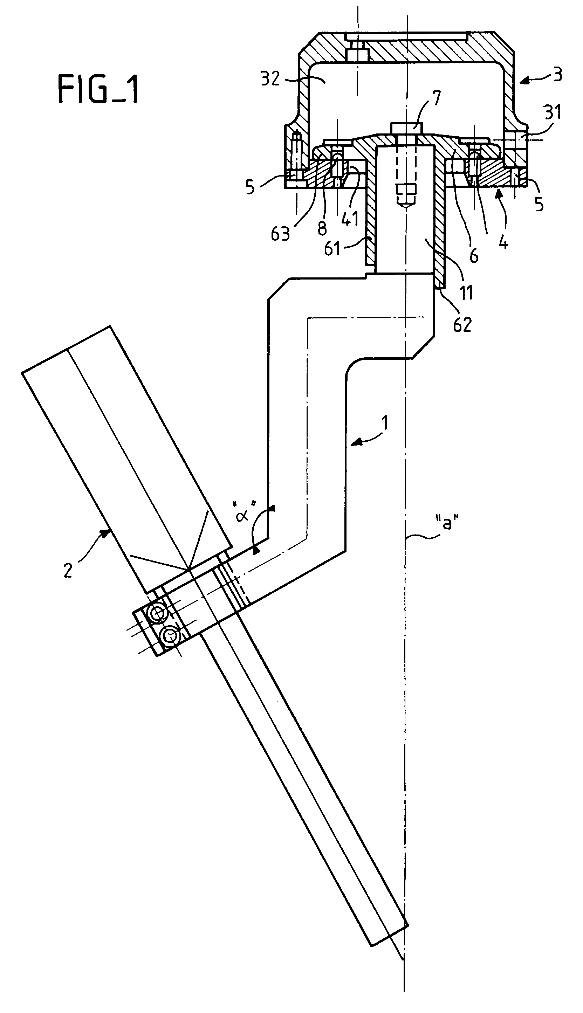

Le dispositif de déclenchement automatique selon l'invention est constitué essentiellement, comme visible en figure 1, par un bras porte-outils, ici un bras porte-torche 2, suspendu à un boitier 3 se présentant sous la forme d'une enceinte dont la base est obturée par un couvercle 4 fixé sur le boîtier par des goujons 5. Ce boitier est lui-même accouplé au bâti du robot (non représenté).

Le bras porte-outils 1 est, dans l'exemple considéré, contre-coudé de sorte que sa position opérationnelle n'est évidemment pas celle correspondant à son centre de gravité. Toutefois, l'extrémité libre dudit bras est pliée suivant un angle obtu "α" afin que l'outil porté par cette plage soit dirigé vers l'axe "a" du robot et que son extrémité opérationnelle coïncide avec cet axe. Cette disposition présente de nombreux avantages et notamment évite une programmation de tous les axes du robot pour obtenir une telle configuration. L'extrémité supérieure du bras 1 comporte, quant à elle, une tête 6 munie d'un fourreau 61 dans lequel est engagée l'extrémité supérieure 11 du bras porte-outils, la tête étant accouplée au bras par un organe de fixation 7 par exemple un goujon. La jupe du fourreau 61 se prolonge sous la forme d'un méplat 62 venant en butée sur l'une des faces du bras 1 qui, à ce niveau est de section polygonale, de manière à éviter que le bras puisse pivoter sur lui-même en cas de choc latéral.

La tête 6 du bras porte-outils se présente sous la forme d'un plateau circulaire débordant largement de la section du bras porte-outils, son épaulement annulaire 63, constituant la face inférieure du plateau, venant reposer sur la face interne du couvercle 4. Ce couvercle présente en son centre une large ouverture 41 normalement masquée par le plateau de la tête 6, cette ouverture ayant une double fonction, d'une part, permettre le libre passage du bras porte-outils ainsi que son débattement angulaire, d'autre part, servir d'orifice de fuite ou de décharge en cas de sollicitation intempestive enregistrée par le bras porte-outils.

Le boitier 3, qui se présente sous la forme d'un corps creux, sans pièce mécanique, comporte un trou taraudé 31 communiquant avec l'enceinte définie par le boîtier, cet orifice étant accouplé à une alimentation en air. Un second trou taraudé (non visible parce que placé dans le même plan que l'orifice 31) est quant à lui, accouplé à un capteur à seuil de pression.

Le dispositif tel qu'il vient d'être décrit est de type pneumatique, et la position du bras 1 support de torche 2 en position de travail ou en position dite "opérationnelle" est déterminée par la cinématique du robot et maintenue par une force active due à la pression d'air emmagasinée dans l'enceinte 32 du boîtier par le trou d'alimentation 31. Cette pression qui, dans le module considéré, est de 0,9 bar, maintient la tête 6 du bras en appui sur le couvercle 4 du boîtier, de sorte que l'orifice 41 est masqué par l'épaulement annulaire 63 du plateau constituant la tête 6. Des pions de centrage 8 favorisent le positionnement de ladite tête 6 sur le couvercle 4. Lesdits pions de centrage 8 possèdent une partie supérieure arrondie permettant une séparation sans détérioration du couvercle 4 et de la tête 6.

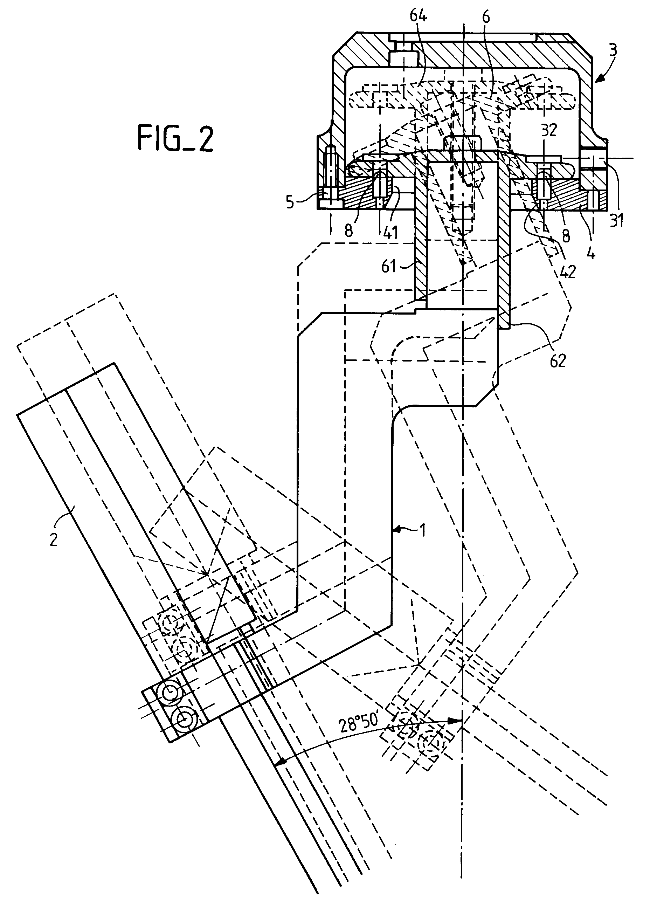

En cas de sollicitation intempestive du bras porte-outils, notamment en cas de choc latéral, frontal ou de collision, le bras porte-outils 1, comme visible en figure 2, (en l'espèce le bras est soumis à un choc latéral de gauche à droite), qui est simplement suspendu au boitier 3 est entraîné en déplacement angulaire, comme illustré en traits mixtes sur la figure 2, ce qui engendre tout naturellement le basculement de la tête 6 et la mise à l'air libre de l'enceinte 32 du boîtier 3 par l'ouverture 41 qui n'est plus obturée par l'épaulement en forme de plateau 63 de la tête 6. Dès que la pression chute dans l'enceinte 32, la fuite est détectée par le capteur à seuil de pression (non représenté) qui transmet l'information à l'armoire électrique du robot et en commande l'arrêt immédiat. Le déplacement pendulaire du bras porte-outils 1 est autorisé par la largeur de l'ouverture 41 qui est sensiblement plus grande que la section du fourreau 61 entourant l'extrémité supérieure du bras 1 de manière à permettre ce débattement tout en autorisant la fuite de l'air comprimé contenu dans l'enceinte 32. La course angulaire du bras support 1 est limitée par le bord de l'ouverture 41 qui est, à dessein, chanfreinée en 42, et par la butée du bord externe du plateau de la tête 6 contre la face interne du couvercle 4.

Selon un autre exemple, également visible en traits mixtes sur la figure 2, le choc peut être frontal, et dans ce cas, le bras support étant simplement suspendu au boîtier 3, celui-ci peut librement reculer à l'intérieur de l'enceinte 32 comme illustré par les traits mixtes 64. Là encore, l'ouverture 41 du couvercle 4 est dévoilée et l'enceinte 32 est mise en communication avec l'air libre.

L'opérateur peut, lorsque le robot a été stoppé remettre l'outil dans sa configuration initiale après avoir détecté d'un simple coup d'oeil les anomalies existant dans l'environnement de l'outil. Tant que le circuit d'air n'a pas été remis en fonctionnement, le redémarrage des opérations est rendu impossible car le centre de gravité naturel du bras porte-outils contre-coudé, lorsqu'il est "flottant" n'autorise pas le redémarrage de la machine.

## Revendications

1. Dispositif de déclenchement d'arrêt automatique de machines telles que robots, du type comportant un bras pivotant porte-outils susceptible de prendre au moins deux positions, l'une dite « opérationnelle » et l'autre dite « de déclenchement » de l'arrêt du robot lorsque ledit bras est soumis à une force supérieure à celle maintenant le bras dans la position opérationnelle, le bras porte-outils (1) comportant à son extrémité (11) opposée à celle de l'outil (2), une tête (6) en forme de plateau, suspendue dans un boîtier (3) accouplé au robot, ladite tête étant appliquée, dans la position opérationnelle du bras, contre la base (4) de ce boîtier par la pression contrôlée d'un fluide, cette base comportant au moins un orifice de fuite (41) masqué, dans cette position du bras, par ladite tête (6) et susceptible d'être dégagée, lorsque le bras est sollicité par une force extérieure, supérieure à celle de la pression du fluide, dispositif caractérisé en ce que le centre de gravité de l'ensemble du bras (1) est décalé par rapport à l'axe de la tête (6) du bras, la pression du fluide appliquée sur la tête (6) en forme de plateau étant suffisante pour maintenir le plateau de la tête en appui sur la base du boîtier (3).

2. Dispositif selon la revendication 1, caractérisé en ce que le bras porte-outils (1) est contrecoudé, son extrémité libre étant pliée pour que l'outil soit dirigé en direction de l'axe principal « a » du robot et que son extrémité opérationnelle coïncide avec cet axe.

3. Dispositif selon la revendication 1, caractérisé en ce que le boitier (3) est constitué d'une enceinte (32) dont la base est obturée par un couvercle (4) pourvu d'une part de deux pions de centrage (8) de la tête du bras porte-outils et d'autre part d'une ouverture (41) de passage dudit bras, ouverture dont les dimensions sont sensiblement supérieures à la section de ce bras, cette ouverture (41) servant d'orifice de fuite lors du basculement de la tête (6) du bras porte-outils lorsqu'il est sollicité par une force extérieure de façon intempestive.

4. Dispositif selon l'une quelconque des revendications 1 à 3, caractérisé en ce que le bras porte-outils (1) est immobilisé en rotation sur lui-même par l'extrémité (62) en forme de méplat de la jupe prolongeant le fourreau (61) de la tête, en direction de l'extrémité du bras porte-outils.

5. Dispositif selon la revendication 1, caractérisé en ce que la paroi du boitier comporte, au-dessus de la face externe de la tête (en position opérationnelle) un orifice (31) d'alimentation en air.

6. Dispositif selon l'une quelconque des revendications 1 à 5, caractérisé en ce que le fluide est de l'air comprimé.

7. Dispositif selon l'une quelconque des revendications 1 à 6, caractérisé en ce que la paroi du boîtier comporte un second orifice accouplé à un capteur à seuil de pression déclenchant l'arrêt du robot lorsque la pression chute dans l'enceinte (32) du boîtier (3).

8. Dispositif selon l'une quelconque des revendications 1 à 6, caractérisé en ce que la valeur de consigne de la pression régnant dans l'enceinte (32), lorsque le bras est en position opérationnelle, est de 0,9 bar.

9. Dispositif selon l'une quelconque des revendications de 1 à 8, caractérisé en ce que l'ouverture (41) de passage du bras porte-outils (1) est circulaire et est supérieure à la section du fourreau (61) entourant la partie supérieure du bras porte-outils.

10. Dispositif selon la revendication 9, caractérisé en ce que la course angulaire du bras porte-outils (1) est limitée par le diamètre de l'ouverture (61) dont le bord externe (42) est chanfreiné.

11. Dispositif selon la revendication 1, caractérisé en ce que le bras porte-outils étant suspendu au boîtier (3), ledit bras peut librement s'effacer à l'intérieur de l'enceinte (32) en cas de choc frontal.
